**Europäisches Patentamt**

**European Patent Office**

**Office européen des brevets**

(19)

(11) Veröffentlichungsnummer: **0 022 583**
**B1**

# EUROPÄISCHE PATENTSCHRIFT

(12)

(45) Veröffentlichungstag der Patentschrift:
28.03.84

(21) Anmeldenummer: 80200486.1

(22) Anmeldetag: 23.05.80

(51) Int. Cl.³: **F 02 B 37/12**

(54) **Bypasssteuereinrichtung für turboaufgeladene Verbrennungsmotoren.**

(30) Priorität: 11.07.79 CH 6462/79

(43) Veröffentlichungstag der Anmeldung:
21.01.81 Patentblatt 81/3

(45) Bekanntmachung des Hinweises auf die Patenterteilung:
28.03.84 Patentblatt 84/13

(84) Benannte Vertragsstaaten:
CH DE FR GB LI

(56) Entgegenhaltungen:
DE - B - 1 040 839
US - A - 2 710 521
US - A - 3 102 381
US - A - 3 163 984

Kleines Handbuch technischer Regelvorgänge (Winfried Oppelt) S.329

(73) Patentinhaber: BBC Aktiengesellschaft Brown, Boveri & Cie., Haselstrasse, CH-5401 Baden (CH)

(72) Erfinder: Zumstein, Bruno, Dipl.-Ing.,
Sonnenbergstrasse 27, CH-6005 Luzern (CH)

## Bypasssteuereinrichtung für turboaufgeladene Verbrennungsmotoren

Die vorliegende Erfindung betrifft eine Bypasssteuereinrichtung für turboaufgeladene Verbrennungsmotoren nach dem Oberbegriff des Patentanspruchs 1.

Mit Bypasseinrichtungen lässt sich bekanntlich das Teildrehzahlverhalten turboaufgeladener Verbrennungsmotoren verbessern. Dabei wird ein vom jeweiligen Betriebszustand des Motors abhängiger Anteil der verdichteten Ladeluft über eine Bypassleitung an eine vor der Abgasturbine liegende Stelle der Abgasleitung abgeführt. Auf diese Weise erhält der Motor einen höheren Ladedruck als bei Turboaufladung ohne Bypass. Zu diesem Zweck weist die Bypasseinrichtung ein Bypassventil auf, das durch irgendeine motorlastabhängige Grösse als Führungsgrösse gesteuert werden kann. Die Ventilerhebung im Bypass verläuft dabei so, dass im Leerlauf- und im unteren Teildrehzahlbereich eine grosse und mit zunehmender Drehzahl immer weiter abnehmende Luftmenge überströmt, bis nahe der Nenndrehzahl das Ventil ganz schliesst und das Überströmen von Bypassluft unterbunden wird.

Bei einer bekannten, in der FR-A-2 308 792 beschriebenen Bypasseinrichtung wird beispielsweise als Führungsgrösse zur Steuerung des Bypassluftstromes die über dem Bypass herrschende Druckdifferenz zwischen der verdichteten Ladeluft und dem Auspuff am Turbineneintritt im Verhältnis zum Ladedruck verwendet.

Es wurde auch schon vorgeschlagen, siehe diesbzüglich die US-A-3 163 984, die Motordrehzahl als Führungsgrösse zu verwenden, doch ist die dort beschriebene Lösung konstruktiv aufwendig und dürfte dementsprechend teuer sein.

Die im kennzeichnenden Teil des Patentanspruchs 1 definierte Erfindung entstand aus der Aufgabenstellung, eine Bypasssteuereinrichtung von einfacherem Aufbau zu schaffen, bei der ebenfalls die Motordrehzahl als Führungsgrösse benutzt wird. Der Grund dafür war die vorzugsweise für Fahrzeugmotoren geplante Verwendung dieser Einrichtungen, wofür sich die Motordrehzahl als Führungsgrösse besonders gut eignet, wobei aber die Betriebssicherheit im praktischen Fahrbetrieb gewährleistet sein muss.

Die Erfindung wird im folgenden unter Bezugnahme auf das in der Zeichnung dargestellte Ausführungsbeispiel näher beschrieben. In der Zeichnung stellen dar:

Fig. 1 einen Turboladermotor mit einer Bypasseinrichtung und

Fig. 2 die dafür vorgesehene erfindungsgemässe Bypasssteuereinrichtung.

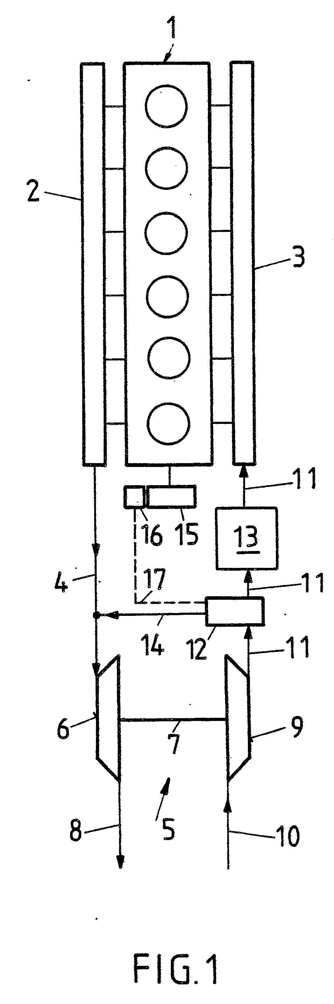

Der in Fig. 1 schematisch dargestellte Sechszylinderturboladermotor 1 weist einen Abgassammler 2 und einen Ladeluftaufnehmer 3 auf. Die Abgase gelangen über ein Abgasrohr 4 in die Abgasturbine 6 des Turboladers 5 und verlassen sie durch ein Auspuffrohr 8. Die Abgasturbine 6 ist durch eine Welle 7 mit dem Verdichter 9 verbunden, der durch eine Ansaugleitung 10 Luft ansaugt und sie verdichtet über eine Ladeluftleitung 11 durch das Bypasssteuergehäuse 12 in einen Ladeluftkühler 13 und weiter in den Ladeluftaufnehmer 3 drückt, aus dem die Zylinder ihre Verbrennungsluft erhalten. Die Bypassleitung 14 verbindet das Bypasssteuergehäuse 12 mit einer Stelle des Abgasrohres vor dem Eintritt in die Turbine 6. Zur Bypasseinrichtung gehört ferner eine vom Schwungrad 15 antreibbare volumetrische Hydraulikpumpe 16, für die vorzugsweise eine Zahnradpumpe in Frage kommt, sowie eine Hydraulikleitung 17 zwischen der Pumpe 16 und dem Steuergehäuse 12. Als Hydraulikflüssigkeit wird man vorzugsweise Öl verwenden.

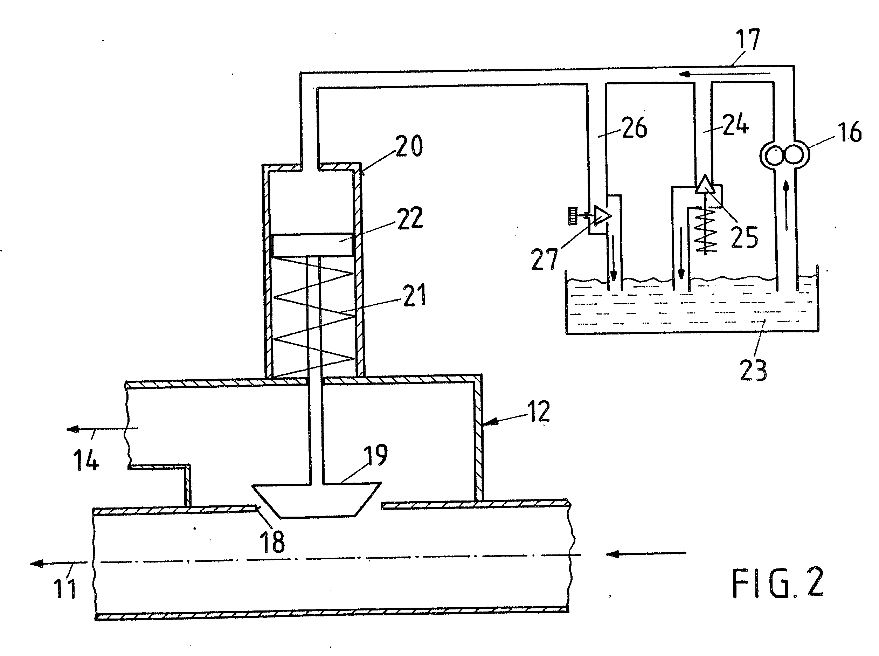

Die Bypasssteuereinrichtung ist in Fig. 2 schematisch dargestellt. Das Steuergehäuse 12 steht über eine Ventilöffnung 18 mit der Ladeluftleitung 11 und über die Bypassleitung 14 mit dem Abgasrohr 4 in Verbindung. Das mit der Ventilöffnung 18 zusammenwirkende Bypassventil 19 ist als Tellerventil ausgebildet, das am oberen Ende seines Ventilschaftes einen in einem Betätigungszylinder 20 verschiebbaren, durch eine Druckfeder 21 belasteten Kolben 22 aufweist.

Parallel zur Hydraulikpumpe 16, die die Hydraulikflüssigkeit aus einem Hydraulikbehälter 23 ansaugt, sind zwischen letzterem und der Hydraulikleitung 17, die in den Betätigungszylinder 20 mündet, eine Rückführleitung 24 mit einem Druckbegrenzungsventil 25 und eine Drosselleitung 26 mit einem auf die jeweilige Verdichter- und Bypasscharakteristik einstellbaren Drosselventil 27 vorgesehen. Letzteres sorgt durch seine Drosselcharakteristik dafür, dass das von der Pumpe 16 geförderte Öl in die Hydraulikleitung 17 einen mit der Drehzahl des Motors und damit der Pumpe 16 ansteigenden Druck erzeugt, so dass das anfänglich im Leerlauf und im unteren Drehzahlbereich durch die Feder 21 ganz offen gehaltene Ventil 19 immer weiter schliesst und damit den Bypassstrom über die Bypassleitung 14 allmählich verringert, bis kurz vor Erreichen des Vollastzustandes die Ventilöffnung 18 gänzlich abgesperrt und der Bypassstrom damit unterbunden ist. Ein weiteres Ansteigen des Druckes wird durch das Druckbegrenzungsventil 25 verhindert, das überschüssiges Öl in den Behälter 23 zurück entweichen lässt.

Dank ihres einfachen Aufbaues und der zuverlässig zu ermittelnden Förderkennlinie der Pumpe und Drosselcharakteristik des Drosselventils 27 lässt sich der Bypassstrom einer solchen, von der Motordrehzahl abhängigen Bypasssteuereinrichtung sehr gut den Bedürfnissen des betreffenden Motors anpassen.

Die Motordrehzahl ist eine eindeutige Führungsgrösse, die sich besonders für Motoren eignet, die im Betrieb mit Drehzahldrückung arbeiten.

Bezeichnungsliste

   1 Sechszylinderturboladermotor
   2 Abgassammler
   3 Ladeluftaufnehmer
   4 Abgasrohr
   5 Turbolader
   6 Abgasturbine
   7 Welle
   8 Auspuffrohr
   9 Verdichter
  10 Ansaugleitung
  11 Ladeluftleitung
  12 Bypasssteuergehäuse
  13 Ladeluftkühler
  14 Bypassleitung
  15 Schwungrad
  16 Volumetrische Hydraulikpumpe
  17 Hydraulikleitung
  18 Ventilöffnung
  19 Bypassventil
  20 Betätigungszylinder
  21 Druckfeder
  22 Kolben
  23 Hydraulikbehälter
  24 Rückführleitung
  25 Druckbegrenzungsventil
  26 Drosselleitung
  27 Drosselventil

**Patentansprüche**

1. Bypasssteuereinrichtung für turboaufgeladene Verbrennungsmotoren, mit einer von der Motordrehzahl abhängigen Öffnungscharakteristik für ein Bypassventil (19) in einer Bypassleitung (14), die eine stromabwärts des Verdichters (9) liegende Stelle der Ladeluftleitung (11) mit einer vor dem Turbineneintritt befindlichen Stelle der Abgasleitung (4) verbindet, gekennzeichnet durch einen geschlossenen Hydraulikkreis, der eine proportional zur Drehzahl des Verbrennungsmotors (1) angetriebene volumetrische Hydraulikpumpe (16), einen Behälter (23) für die Hydraulikflüssigkeit, einen Betätigungszylinder (20) für das Bypassventil (19), eine die Hydraulikpumpe (16) mit dem Betätigungszylinder (19) verbindende Hydraulikleitung (17) und ein in einer Drosselleitung (26) zwischen Hydraulikleitung (17) und Behälter (23) vorgesehenes Drosselventil (27) mit verstellbarem Drosselquerschnitt aufweist.

2. Bypasssteuereinrichtung nach Anspruch 1, dadurch gekennzeichnet, dass zwischen der Hydraulikleitung (17) und dem Behälter (23) eine Rückführleitung (24) mit einem Druckbegrenzungsventil (24) vorhanden ist.

**Claims**

1. Bypass-control arrangement for turbocharged internal combustion engines, this arrangement embodying a valve-opening characteristic curve, which is a function of the engine speed, for a bypass valve (19) in a bypass line (14) which connects a point in the charge-air line (11), this point being situated downstream of the compressor (9), to a point in the exhaust-gas line (4), this latter point being situated upstream of the turbine inlet, characterised by a closed hydraulic circuit which possesses a volumetric hydraulic pump (16), driven at a speed proportional to that of the internal combustion engine (1), a hydraulic fluid reservoir (23), an actuating cylinder (20) for the bypass valve (19), a hydraulic line (17), connecting the hydraulic pump (16) to the actuating (19), and a regulating valve (27) which is provided in a regulating line (26) between the hydraulic line (17) and the reservoir (23), the regulating cross-section of this valve (27) being adjustable.

2. Bypass-control arrangement according to claim 1, characterised in that a return line (24) is present between the hydraulic line (17) and the reservoir (23), this return line (24) possessing a pressure-limiting valve (24).

**Revendications**

1. Dispositif de commande de dérivation pour moteurs à combustion interne à turbocompresseur, présentant une caractéristique d'ouverture dépendant du régime du moteur pour une valve de dérivation (19) dans une conduite de dérivation qui raccorde un endroit de la conduite d'air de suralimentation (11) situé en aval du compresseur (9) à un endroit du tuyau d'échappement (4) précédant l'entrée de la turbine, caractérisé par un circuit hydraulique fermé qui comporte une pompe hydraulique volumétrique (16) entraînée à une vitesse proportionnelle au régime du moteur à combustion interne (1), un réservoir (23) pour le fluide hydraulique, un cylindre d'actionnement (20) pour la valve de dérivation (19), une conduite hydraulique (17) raccordant la pompe hydraulique (16) au cylindre d'actionnement (19) et une valve d'étranglement (27) à section d'étranglement réglable prévue dans une conduite d'étranglement (26) entre la conduite hydraulique (17) et le réservoir (23).

2. Dispositif de commande de dérivation suivant la revendication 1, caractérisé en ce qu'entre la conduite hydraulique (17) et le réservoir (23) est prévue une conduite de retour (24) avec une valve limiteuse de pression (25).

FIG.1

FIG. 2